# EUROPEAN PATENT APPLICATION

(11) **EP 2 764 972 A1**
(43) Date of publication of application: **13.08.2014**
(21) Application number: 13290025.9
(22) Date of filing: 06.02.2013
(51) Int. Cl.: B29C 44/34

(54) **Expansion of particulate matter**

(71) Applicant: JSP International SARL, 60190 Estrées-Saint-Denis (FR)
(72) Inventor: Coles, Andrew, 60190 Estrees-Saint-Denis (FR); Dzikowski, Pascal, 60190 Estrees-Saint-Denis (FR); Sakaguchi, Masakazu, 60190 Estrees-Saint-Denis (FR)
(74) Representative: Cozens, Paul Dennis

(57) **Abstract**

A method of expansion of particulate matter by the use of radio-frequency electromagnetic radiation, the method comprising: placing particulate matter and a liquid heat transfer agent in a chamber; applying radio-frequency electromagnetic radiation, thereby heating the heat transfer agent and in turn heating the particulate matter, causing it to expand; and controlling the temperature in the chamber so as to avoid heating the particulate matter to its fusing temperature.

## Description

The present invention relates to a method of and apparatus for the expansion of particulate matter; in particular, the use of radio-frequency (RF) electromagnetic radiation is described for expanding particles, especially thermoplastic particles, in preparation for moulding. This invention may be especially useful in the secondary expansion of previously expanded thermoplastic particles, such as in the processing of beads of polypropylene, which are moulded into various articles - and for the similar processing of other materials.

There is a substantial worldwide market for products made of moulded closed-cell foams. The starting material is typically supplied in the form of pre-expanded foam beads of specific characteristics and typically a few millimetres in diameter; the beads are subsequently moulded, for example in steam-chests, into a final product.

Expanded polypropylene (EPP) is a closed-cell, polypropylene copolymer plastic foam first developed in the 1970s. EPP has many desirable material properties, which may further be tailored to requirements, including: energy absorption; durability; thermal insulation; buoyancy; resistance to impact, water and chemicals; and a high strength to weight ratio. It may also be recyclable. EPP can be made in a wide range of densities, ranging from high density for energy absorption, medium density for furniture and other consumer products, to low density for packaging. It has also found widespread use, for example, in the automotive industry.

For industrial applications EPP is often sold in particle or bead form, for example as sold under the trade name ARPRO^{®} or P-BLOCK, as manufactured by JSP Corporation.

Manufacture of the beads involves a process of extrusion of pellets of polypropylene (PP) resin combined with other ingredients followed by expansion (hence expanded PP, or EPP) to form beads. The expansion step involves subjecting pellets to heat and pressure in an autoclave and subsequently discharging them (the drop in pressure to atmospheric pressure causes them to expand). Additional expansion steps may also be used to further decrease the bead density.

The processing which results in the pre-expanded foam beads typically involves a series of heating and pressurising steps in order to expand the pellets of much denser precursor material. The pellets are subjected to an initial pre-pressurisation, which forces air into their cell structure and results in the build-up of an internal pressure. This process is further developed with the application of further pressure and heating of the beads with steam. This internal pressure causes the beads to expand when the external pressure is subsequently removed. After drying, the beads are left for some time to recover and stabilise before being shipped to customers for moulding at moulding plants.

The beads are then fused together to form moulded foam parts, both as stand-alone products (such as containers for food and beverages) and as system components (such as automotive seating and bumpers). In practice, a moulded part such as a car bumper may comprise millions of beads fused together.

One method of moulding EPP beads into finished parts involves heating and fusing the beads in a metal mould via steam injection.

Typically, a range of several different grades of beads of various densities (specified in terms of grams / litre) are made available, each grade requiring preparation (expansion, categorisation and storage) on an industrial scale, including large processing, expansion and storage facilities, and is performed at a dedicated bead production plant.

Expanded beads are often transported from bead production plants to storage depots and to moulding plants in curtain-sided trailers. Transportation and storage can form a very significant element of customers' costs as although the material is relatively light it can be very bulky - for example, material currently requiring a 120 m³ trailer for transport may weigh no more than 1.5 tonnes. There are also handling issues, as filling a trailer with beads (which is often done pneumatically) can take a considerable time and require particular precautions to be taken, for example against electrostatic charges.

The present invention aims to address at least some of these problems.

The present invention therefore aims to provide an improved method and apparatus for the efficient storage and transportation of resilient cellular material such as resilient closed-cell (such as expanded polymer) foam products, especially the bead form of expanded polyolefin foams such as polypropylene (PP), polyethylene (PE) and reticulated polyethylene (x-PE).

The process herein described may have application to both expanded and non-expanded thermoplastics, such as expanded polypropylene (EPP), expanded polyethylene (EPE), polypropylene (PP), expanded polystyrene (EPS), polystyrene (PS), polyamide (PA) and polycarbonate (PC) - and may be used both in completely closed (batch) and partially closed (semi batch, continuous) systems.

According to one aspect of the invention, there is provided a method of expansion of particulate matter by the use of radio-frequency (RF) electromagnetic radiation in combination with a liquid or fluid heat transfer agent.

According to another aspect of the invention, there is provided a method of expanding particulate matter, the method comprising:
applying radio-frequency (RF) electromagnetic radiation to the chamber, thereby heating the heat transfer agent and in turn heating the particulate matter, causing it to expand;
controlling the temperature in the chamber so as to avoid heating the particulate matter to its fusing temperature;

Preferably, the method further comprises placing a known mass of particulate matter and a heat transfer agent in a chamber. Preferably the heat transfer agent is fluid, preferably a liquid.

Preferably, the method further comprises extracting the expanded particulate matter from the chamber.

Preferably, the method further comprises determining when the particulate matter has expanded to a pre-determined volume.

Preferably, the method further comprises vaporising the heat transfer agent and, more preferably, controlling the temperature in the chamber by regulating the pressure due to the vaporised heat transfer agent, preferably by venting a portion of the vaporised heat transfer agent out of the chamber.

Preferably, the particulate matter comprises a plastic foam and the method further comprises releasing the chamber pressure to allow the particulate matter to expand due to its internal pressure.

Preferably, the method comprises at least one cycle of heating the particulate matter and releasing the pressure in the chamber.

Preferably, the particulate matter comprises thermoplastic particles or beads, preferably one of: expanded and non-expanded thermoplastics, such as expanded polypropylene (EPP), expanded polyethylene (EPE), polypropylene (PP), expanded polystyrene (EPS), polystyrene (PS), polyamide (PA) and polycarbonate (PC).

Preferably, the heat transfer agent comprises water. Preferably, controlling the temperature in the chamber comprises regulating the steam pressure in the chamber.

Preferably, the method comprise regulating the pressure in the chamber at below 2 bar, preferably between 1 bar and 1.5 bar, preferably between 1.1 and 1.3 bar, preferably around 1.2 bar.

Preferably, the applied radio-frequency (RF) electromagnetic radiation has a frequency within +/- 10 MHz of one of: 13.56 MHz, 27.12 MHz and 40.68 MHz.

Preferably, the method further comprises agitating the beads in the chamber.

According to another aspect of the invention, there is provided a method of processing particulate matter for moulding, the method comprising:
receiving particulate matter of a first density;
expanding the particulate matter by means of radio-frequency radiation and in the presence of a heat transfer agent to a second density lower than the first density.

Preferably, the received particulate matter has been previously pre-expanded to the first density.

The particulate matter may be processed in-line or in a batch process.

Preferably, the method further comprises transferring the particulate matter directly into a mould. Preferably, the transferring is achieved by means of gravity.

According to another aspect of the invention, there is provided a particulate matter moulding apparatus adapted with an integrated radio-frequency (RF) electromagnetic expansion apparatus. Preferably, the apparatus further comprises an insulated hopper adapted to store expanded particles for transfer into the moulding apparatus.

According to another aspect of the invention there is provided particulate matter adapted to be expanded by the method herein described.

According to another aspect of the invention there is provided a control system for the apparatus. Preferably, the control system comprises a feedback circuit or loop between the moulding cycle and the expansion process.

According to another aspect of the invention, there is provided apparatus for storing particulate matter, the apparatus comprising:
an input feed;
a pair of vessels arranged in parallel; and
an output feed;
wherein
the input and output feeds are adapted such that as one vessel is configured to be filed with particulate matter, the other vessel is configured to be emptied of particulate matter.

According to another aspect of the invention, there is provided apparatus for the expansion of particulate matter by the use of radio-frequency (RF) electromagnetic radiation in combination with a liquid or fluid heat transfer agent.

As used herein the term "RF", and similar terms, preferably connotes EM waves of: less than 300 MHz (wavelengths of more than 1 m); preferably less than 100 MHz (wavelengths of more than 3 m); and preferably less than 40 MHz or 30 MHz (wavelengths of more than 7.5 m or 10 m), preferably less than 3 MHz or 1 MHz (wavelengths of more than 100 m or 300 m), preferably less than 300 KHz (wavelengths of more than 1 km), or even down to frequencies of hundreds of Hz (up to wavelengths of thousands of km).

The invention also provides a computer program and a computer program product for carrying out any of the methods described herein, and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

The invention extends to methods and/or apparatus substantially as herein described with reference to the accompanying drawings.

Any feature in one aspect of the invention may be applied to other aspects of the invention, in any appropriate combination. In particular, method aspects may be applied apparatus aspects, and vice versa.

Furthermore, features implemented in hardware may generally be implemented in software, and vice versa. Any reference to software and hardware features herein should be construed accordingly.

The invention will now be described, purely by way of example, with reference to the accompanying drawings, in which:
Figure 1 shows a conventional particle processing scheme, including standard secondary expansion;
Figures 2 show an RF-based particle expansion apparatus and process;
Figure 3 shows a particle processing scheme using the RF-based particle expansion apparatus; and
Figure 4 shows the particle expansion apparatus of Figure 2 with a bead agitator.

### Overview

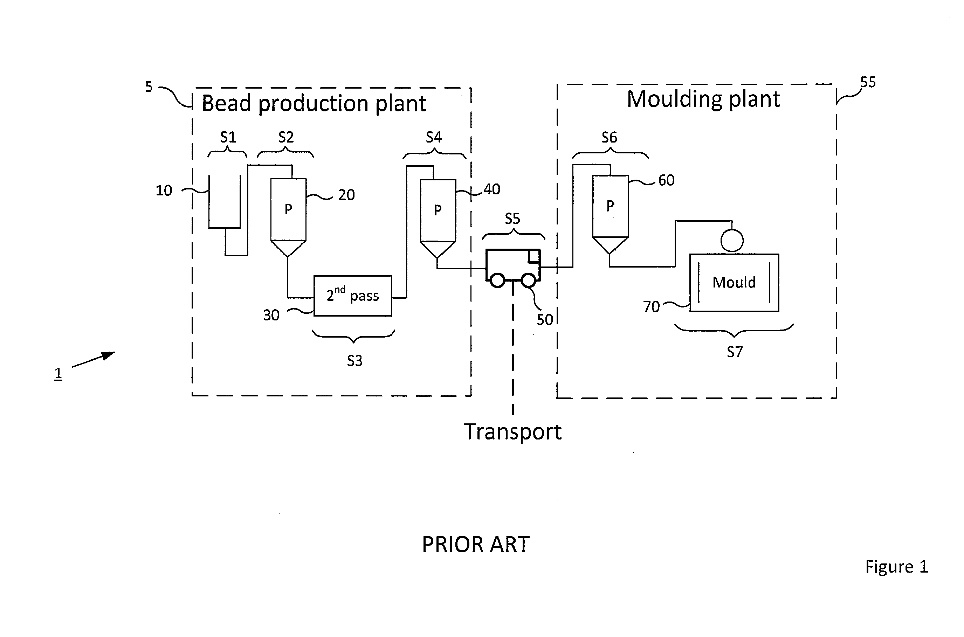

Figure 1 shows a conventional particle processing scheme 1, including standard secondary or "second pass " expansion, as carried out at a bead production plant 5.

This example shows aspects of the manufacture, distribution and moulding of polypropylene beads of a density of 22 g/l; similar principles broadly apply for beads of other materials and densities.

At the bead production plant 5:
S1. A starting batch of 53 g/l beads, made from precursor pellet material (i.e. previously having undergone primary expansion in an autoclave), is kept in a storage tank 10
S2. The beads are transferred to a pressure tank 20, typically 15m³ in size, and undergo an initial expansion stage under air at 6 bar pressure.
S3. The expanded beads are transferred to a second pressure tank 30, and undergo conventional secondary expansion, under steam at 1.2 bar pressure.
S4. The damp beads, now of density 22 g/l, are transferred to a large holding tank 40 of 45m³ and kept at atmospheric pressure for 24h to stabilise

Distribution:
S5. The 22 g/I beads are transported (typically by truck 50) to the moulding plant 55

At the moulding plant 55:
S6. The beads are transferred to a pressure tank 60 and re-pressurised to 1.5 bar for approximately 24h to prepare for moulding (typical internal pressure for moulding is 0.5 - 1.5 bar)
S7. The beads are transferred into a press 70, such as a steam chest press, for moulding

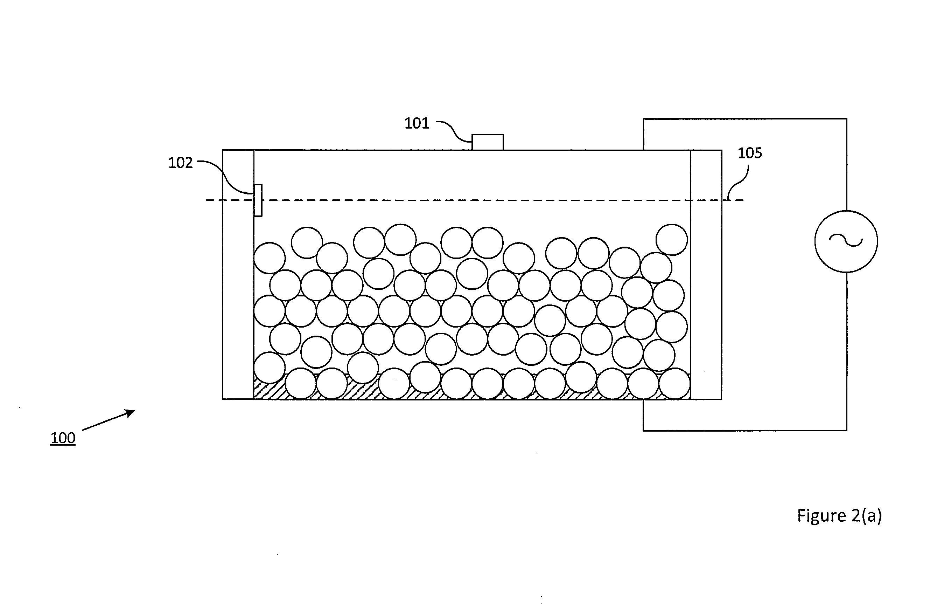

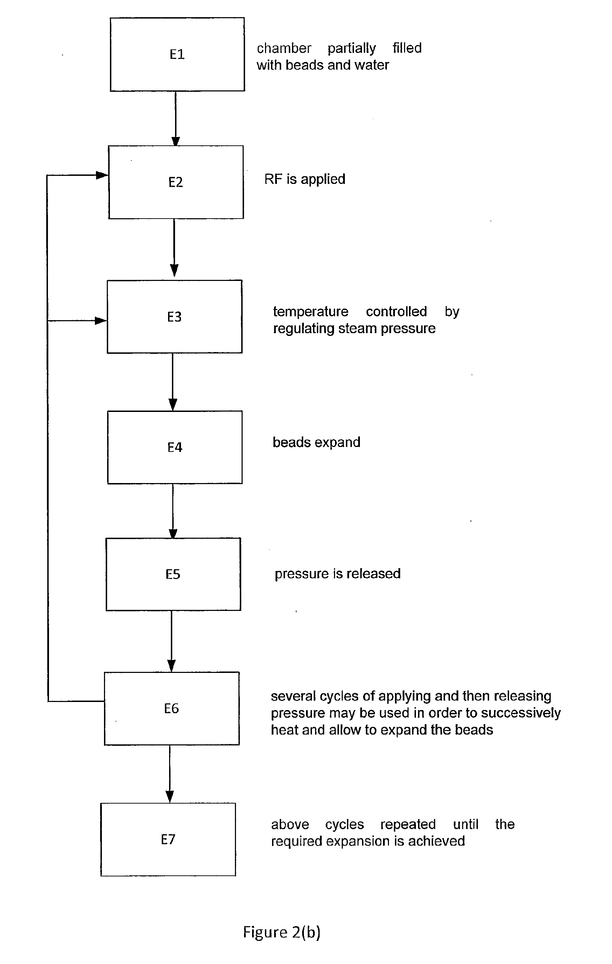

Figures 2 shows (a) an RF-based particle expansion apparatus 100 and (b) process (typically for secondary expansion).

This process uses electromagnetic energy, in particular, radio-frequency (RF) - or high-frequency (HF) - waves to expand the beads in the presence of a heat transfer agent such as water. Other heat transfer agents may also be suitable.

Generally, a known mass of beads is introduced into a chamber of known volume, located between a pair of plate electrodes, a small amount of a heat transfer agent (such as water) is added, and a RF source is used to apply a RF field across the chamber, heating the water and therefore the beads and causing them to expand to a set volume, thereby resulting in expanded beads of the required density.

In more detail, a typical RF expansion process E1 to E7 (for example to replace step S3 as described above) is as follows:
E1. The chamber is partially filled with high-density beads and a small amount of water
E2. The RF is applied, heating the water to steam
E3. The temperature in the chamber is controlled by regulating the steam pressure, maintaining the pressure to below 2 bar, for example between 1 bar and 1.5 bar, typically between 1.1 and 1.3 bar, notably around 1.2 bar
E4. The beads expand but, because the temperature is prevented from rising too high, do not fuse
E5. The pressure is released, allowing the beads to expand further
E6. Several cycles of applying and then releasing pressure may be used in order to successively heat and allow to expand the beads
E7. The above cycles are repeated until the required expansion is achieved i.e. when the required volume for the initial known mass (and therefore density) is achieved. This may be determined by a sensor in the chamber, such as an optical sensor 101 in the roof of the chamber or an optical sensor 102 in the wall of the chamber detecting expansion having reached a fill-line 105.

The process may be categorised by several process parameters including:
- RF field strength and application time
- pressure, both initial and during the expansion process
- temperature, including the temperature increase
- bead softness
- heat transfer agent, eg. water
- bead blowing agent, eg. air

Radio waves are generally described as having frequencies of 3 - 300 MHz (and therefore correspondingly wavelengths of 100 m - 1 m), potentially down to 1 MHz (300m wavelength).

Electromagnetic (EM) frequencies are defined and allocated by international agreements to particular spectrum bands, known as Industrial, Scientific and Medical (ISM) Bands, for specific uses, the emission of radiation outside these bands being strictly regulated. For example:
- microwave bands include: 896 MHz in the UK; 915 MHz in Europe and the USA and 2450 MHz Worldwide
- RF bands include 13.56 MHz, 27.12 MHz and 40.68 MHz

Permitted frequencies include those within a permitted bandwidth of the aforementioned.

Some embodiments operate within a frequency range of 1 - 100 MHz (wavelengths of 300m - 3m), especially 1 - 40 MHz (wavelengths of 300m - 7.5m), more especially 3 - 30 MHz (wavelengths of 100m - 10m).

Other embodiments operate at (or approximately at) the specific defined and allocated allowed frequencies, for example at 13.56 MHz, 27.12 MHz or 40.68 MHz, typically within +/- 10 MHz, preferably +/- 1 MHz, more preferably +/- 0.1 MHz or even +/- 0.01 MHz.

Generally, RF heating uses a triode or tetrode valve with a resonant LC circuit with transmission lines or co-axial arrangements to deliver power to an applicator. Generally, applicators take the form of a capacitor where the RF power is applied to one or both electrodes.

The use of RF resulting in heating of the heat transfer fluid in a first mode (ionic heating) when the heat transfer fluid is in a liquid state and in a second mode when the heat transfer fluid is in a gaseous state, wherein heating in the first mode is dominant such that the heating by the applied RF predominantly occurs when the heat transfer fluid is in the liquid state, therefore the heating of the heat transfer fluid (and consequently the particles) becoming self-limiting as the heat transfer fluid vaporises.

The use of RF for secondary bead expansion may be incorporated into the existing bead distribution and moulding scheme, including use with existing moulding machines (steam chests).

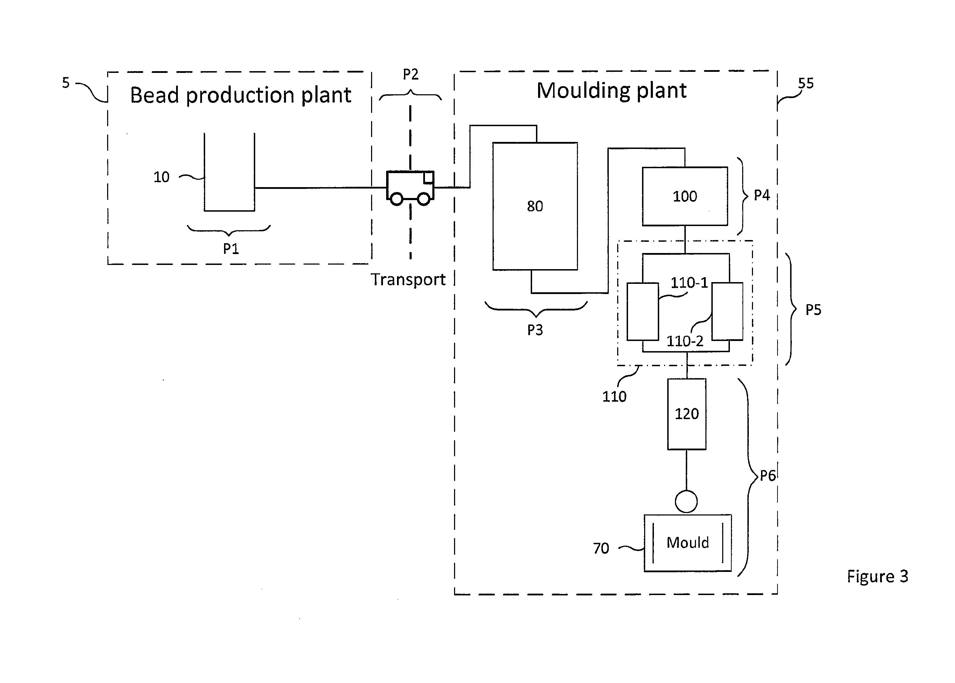

Figure 3 shows a particle processing scheme, to replace the conventional particle processing scheme as described above in steps S1 to S7, using the RF-based particle expansion apparatus.

At the bead production plant 5:
P1. As previously in S1, a starting batch of 53 g/l beads, made from precursor pellet material (i.e. previously having undergone primary expansion in an autoclave), is kept in a storage tank 10

Distribution:
P2. The 53 g/l beads are transported (typically by truck 50) to the moulding plant 55.

At the moulding plant 55:
P3. The beads are transferred to a pressure tank 80 and subjected to a pressure of 10 bar for approximately 24h in order to force air into the beads
P4. The beads undergo secondary expansion in RF chamber 100 as described earlier in steps E1 to E7
P5. The beads undergo a further relaxation stage at approximately 1.5 bar for over about 1 h, in this example in a pair of pressure vessels 110 arranged in parallel, which allows one vessel 110 to fill as the other is emptied
P6.The beads, now of density 22 g/I are transferred to a hopper 120 and subsequently into steam chest 70 for moulding

Aspects of the process may be controlled by a computerised control system, preferably using a feedback loop between the moulding cycle and the secondary expansion process. The control program may be adapted to produce a particular grade of bead and/or a specified moulded product.

The above-described process, using a RF secondary expansion stage, has several potential advantages over the conventional steam procedure, including:
- Reduction in transport and storage costs
   ○ Only high rather than low density beads are transported, allowing more material per truck /or store
   ○ Handling facilities required for only one grade of bead
   ○ Customer can store denser material and expand as required
- Improvement in process control, increase in quality
   ○ Process allows for tight density control, eg. if expander filled gradiometrically, a known mass of beads can be expanded to fill a known volume, resulting in beads of a known density
   ○ Not dependent on characteristics of material being same at all times and stages of the expansion process
   ○ Greater consistency
   ○ Allows for a "dial-in" density per job
   ○ Expansion steps can be repeated until the required density is achieved
   ○ Allows for expansion in a batch process as well as continuously
   ○ The RF equipment including the RF chamber can be small and closely integrated with the moulding apparatus
   ○ Can allow for the transfer of the exact required amount of beads to fill the mould cavity
   ○ Reduction of segregation effects by limiting the number of abnormally light beads which 'float' to the top in large stores of beads
   ○ Allows for fine control of temperature via (steam) pressure
   ○ RF process uses very little water, so there is less need for a separate stage to dry the expanded beads unlike- with conventional steam expansion
- Reduction in energy consumption
   ○ Expansion via RF requires less energy than conventional full-steam expansion process as a smaller amount of steam is required to achieve the same degree of expansion
   ○ Less energy is also required for the moulding process, as the beads are warm when introduced into the moulding press, meaning the steam has less warming to do (the hopper 120 over moulding press 70 may also be pressurised to enhance this)
- Easier mould filling
   ○ The mould is typically filled with beads by means of a "pressure fill" process. This involves applying pressure to the beads to compress and partially collapse them to aid their introduction into the mould. Warm beads are softer and therefore easier to compress.
   ○ The RF process is better at maintaining a constant temperature, pressure - and warmer air - when filling the mould
   ○ Also, with the conventional secondary pass system there may be variation in pressure during discharge of beads from pressure-tanks, resulting in beads with inconsistent internal pressures; the RF process may allow for the pressure to be kept constant, so that beads at the beginning and end of the discharge process have more consistent internal pressures.
- Reduces complexity
   ○ Instead of a customer buying beads of various grades eg. 18, 22, 26, 30, 35 g/l, only one grade of bead eg. 53 g/I need be bought.

### Further aspects, alternatives and modifications

### - drying

Generally, the RF expansion process uses less water than conventional steam expansion, resulting in a reduction in bead moisture and less need for drying. In practice, the beads may be damp ion exiting the pressure tank providing they can flow adequately. However, moisture on the inside wall of the pressure tank may make it difficult to release the pressure. One possible solution is to use a desiccator in the pressure tank.

### - twin tank system

The twin-tank system, comprising a pair of pressure vessels 110 arranged in parallel, which allows one vessel 110 to fill as the other is emptied, avoids the need for a large pressure tank. This arrangement may also be used with conventional second pass expansion.

### - in-line secondary expansion

When used as part of a standard bead processing system, the RF expansion apparatus may be used to expand the beads from a supplied density of, for example, 50g/l or so, to a moulding density of, say, 18 g/l or 22 g/l, which would involve a step of storing or aging the beads in a pressure tank before the moulding step.

Alternatively, the RF-based secondary expansion apparatus may be used directly in an in-line process between storage and processing or moulding, for example by or attaching the RF expansion apparatus to (or otherwise integrating with) a conventional steam-chest press. Thus, an input of as-supplied beads of density say 53 g/l may be expanded to say 18 g/l, gravity-fed into the mould, and moulded immediately.

### - agitator

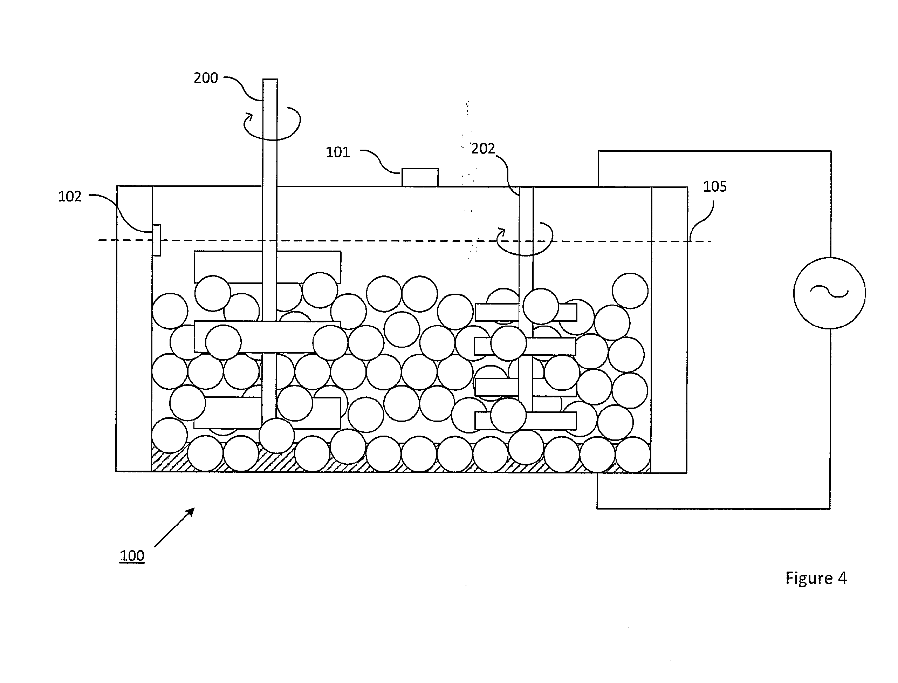

Figure 4 shows the particle expansion apparatus of Figure 2 with bead agitators 200, 202. Although the RF expansion process is designed (via control of the pressure to below 2 bar) to ensure there is sufficient heat only to expand the beads, not to cause them to fuse, agitators may also be used in the chamber to mix the beads and prevent them sticking. The examples shown are arranged vertically in the chamber and comprise a plurality of rotating paddles. As they are located within the RF field they are preferably RF-transparent, and therefore made from homopolymer polypropylene or similar material, and encased in a "black box" of eg. ceramic or alumina, to prevent RF leakage.

In alternative embodiments, the entire RF chamber is rotated or otherwise oscillated to ensure bead agitation.

### - new beads and products

In some embodiments, specialised beads (for example, of particular densities) are supplied which are tailored to work with the RF expansion process and/or with particular process parameters, such as a type of amount/range of heat transfer agent.

The ability of the RF expansion process to allow for tailored bead expansion, potentially in-line and/or as a batch process, may allow for entirely new forms of fused bead product to be moulded, for example, very low density material, say 10g/l, which may not be not commercially viable due to transport and storage costs, graded bead density products and similar.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in any claims are by way of illustration only and shall have no limiting effect on the scope of the claims.

## Claims

1. A method of expansion of particulate matter by the use of radio-frequency electromagnetic radiation, the method comprising:
placing particulate matter and a liquid heat transfer agent in a chamber;
applying radio-frequency electromagnetic radiation, thereby heating the heat transfer agent and in turn heating the particulate matter, causing it to expand; and
controlling the temperature in the chamber so as to avoid heating the particulate matter to its fusing temperature.

2. A method according to claim 1, wherein the heat transfer agent comprises water.

3. A method according to claim 1 or 2, further comprising placing a known mass of particulate matter in the chamber and causing it to expand until the particulate matter has expanded to a pre-determined volume.

4. A method according to any preceding claim, further comprising vaporising the heat transfer agent and wherein controlling the temperature in the chamber comprises regulating the pressure due to the vaporised heat transfer agent.

5. A method according to claim 4, wherein regulating the pressure comprises venting a portion of the vaporised heat transfer agent out of the chamber.

6. A method according to any of claims 4 or 5, wherein regulating the pressure in the chamber comprises maintaining the pressure at below 2 bar, preferably between 1 bar and 1.5 bar, preferably between 1.1 and 1.3 bar, preferably around 1.2 bar.

7. A method according to any preceding claim, wherein the method comprises at least one cycle of heating the particulate matter and releasing the pressure in the chamber.

8. A method according to claim 7, wherein the particulate matter comprises plastic foam such that releasing the chamber pressure causes the particulate matter to expand due to its internal pressure.

9. A method according to any preceding claim, wherein the particulate matter comprises thermoplastic particles or beads, preferably one of: expanded and non-expanded thermoplastics, such as expanded polypropylene EPP, expanded polyethylene EPE, polypropylene PP, expanded polystyrene EPS, polystyrene PS, polyamide PA and polycarbonate PC.

10. A method according to any claim, wherein the applied radio-frequency RF electromagnetic radiation has a frequency within +/- 10 MHz of one of: 13.56 MHz, 27.12 MHz and 40.68 MHz.

11. A method according to any preceding claims, further comprising agitating the particulate matter in the chamber.

12. A method according to any preceding claim, further comprising expanding the particulate matter from a first density to a second predetermined density lower than the first density in preparation for moulding.

13. A method according to claim 12, further comprising storing the expanded particulate matter in preparation for moulding, preferably in an insulated hopper.

14. A method according to claim 12 or 13, further comprising moulding the expanded particulate matter.

15. A method according to claim 14, further comprising moulding the expanded particulate matter in the chamber by applying radio-frequency electromagnetic radiation in the presence of a liquid heat transfer agent
